(19) Europäisches Patentamt
European Patent Office
Office européen des brevets

(11) **EP 3 846 070 A1**

(12) **EUROPEAN PATENT APPLICATION**
published in accordance with Art. 153(4) EPC

(43) Date of publication:
**07.07.2021 Bulletin 2021/27**

(51) Int Cl.:
***G06F 40/40*** *(2020.01)*

(21) Application number: **18932179.7**

(22) Date of filing: **30.08.2018**

(86) International application number:
**PCT/JP2018/032206**

(87) International publication number:
**WO 2020/044509 (05.03.2020 Gazette 2020/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME
KH MA MD TN**

(71) Applicant: **FUJITSU LIMITED
Kanagawa 211-8588 (JP)**

(72) Inventors:
• **KATAOKA, Masahiro
Kawasaki-shi, Kanagawa 211-8588 (JP)**
• **TODA, Shingo
Kawasaki-shi, Kanagawa 211-8588 (JP)**
• **ARIYAMA, Kota
Kawasaki-shi, Kanagawa 211-8588 (JP)**

(74) Representative: **Hoffmann Eitle
Patent- und Rechtsanwälte PartmbB
Arabellastraße 30
81925 München (DE)**

(54) **GENERATION METHOD, GENERATION PROGRAM, AND INFORMATION PROCESSING DEVICE**

(57)     An information processing apparatus (100) refers to a storage unit that stores information in which a single attribute is assigned to plural words, an occurrence rate of which is lower than a criterion, and identifies first and second vector information of an attribute with which a word extracted from first and second text information is associated. The information processing apparatus (100) generates a conversion model by performing training of parameters of the conversion model such that vector information output when the first vector information is input to the conversion model approaches the second vector information.

FIG.1

**Description**

Technical Field

The present invention relates to a generating method, and the like.

Background Art

In recent years, when a first language is translated into another second language, a neural machine translation (NMT) is used. The neutral machine translation includes various kinds of models. For example, a model constituted of an encoder, a recurrent neural network (RNN), and decoder is available.

The encoder is a processing unit that encodes words included in a character string of an input sentence, and that assigns a vector to the encoded word. The RNN is to convert the vector of a word input from the encoder based on the softmax function, and to output the converted vector. The decoder is a processing unit that decodes an output sentence based on the vector of a word output from the RNN.

Conventional techniques includes a technique in which the number of words of input/output layers used in machine learning by the RNN is compressed to reduce an amount of calculation of the softmax function. For example, in a conventional technique, thirty to fifty thousand words are picked up from among approximately one million words according to occurrence rates, and the softmax function is performed, referring to a vector table.

Citation List

Patent Literature

Patent Literature 1: Japanese Laid-open Patent Publication No. 2005-135217

Summary

Technical Problem

However, in the conventional technique described above, there is a problem that an amount of data of vector information that is used for generation of a conversion model is reduced.

If thirty to fifty thousand words having a high occurrence rate are picked up simply and a vector table is referred as in the conventional technique, when a word of a low occurrence rate included in text subject to translation is not entered in the vector table, appropriate translation is not done, and the translation accuracy is degraded.

For example, when text "Kare wa rekishi ni tsugyo shiteiru." is translated by the conventional technique, because the occurrence rate of the word "tsugyo" is low, it is not entered in the vector table, and it is mistranslated as "He is impatient with history". For example, one example of appropriate translation results for "Kare wa rekishi ni tsugyo shiteiru" is "He is familiar with history".

Thus, not to degrade the translation accuracy, it is difficult to reduce the number of words to be entered in the vector table (an amount of data of vector information).

In one aspect, it is an object of the present invention to provide a generating method, a generating program, and an information processing apparatus that enable to reduce an amount of data of vector information used in generation of a conversion model.

Solution to Problem

According to an aspect of the embodiment of the invention, a generating method includes accepting first text information and second text information;

extracting a word, an occurrence rate of which is lower than a criterion out of words included in the first text information, and a word, an occurrence rate of which is lower than a criterion out of words included in the second text information; identifying an attribute that is assigned to the extracted word by referring to a storage unit storing information in which a single attribute is assigned to a plurality of words, an occurrence rate of which is lower than a criterion; identifying first vector information that is associated with an attribute of the word extracted from the first text information, and second vector information that is associated with an attribute of the word extracted from the second text information, by referring to a storage unit that stores vector information according to an attribute of a word, associating with the attribute; and generating a conversion model by performing training of parameters of the conversion model such that vector information output when the first vector information is input to the conversion model approaches the second vector information.

Advantageous Effects of Invention

It is possible to reduce an amount of data of vector information that is used in generation of a conversion model.

Brief Description of Drawings

FIG. 1 is a diagram (1) for explaining processing of an information processing apparatus according to the present embodiment.
FIG. 2 is a diagram (2) for explaining processing of the information processing apparatus according to the present embodiment.
FIG. 3 is a diagram (3) for explaining processing of the information processing apparatus according to the present embodiment.
FIG. 4 is a functional block diagram illustrating a configuration of the information processing apparatus according to the present embodiment.
FIG. 5 is a diagram illustrating an example of a data structure of a first vector table according to the present embodiment.
FIG. 6 is a diagram illustrating an example of a data structure of a second vector table according to the present embodiment.
FIG. 7 is a diagram illustrating an example of a data structure of a training data table according to the present embodiment.
FIG. 8 is a diagram illustrating an example of a data structure of a code conversion table according to the present embodiment.
FIG. 9 is a diagram illustrating an example of a data structure of dictionary information according to the present embodiment.
FIG. 10 is a diagram illustrating an example of a data structure of RNN data according to the present embodiment.
FIG. 11 is a diagram for supplementary explanation for a parameter of an intermediate layer.
FIG. 12 is a flowchart illustrating processing of generating RNN data by the information processing apparatus according to the present embodiment.
FIG. 13 is a flowchart illustrating processing of translating input sentence data by the information processing apparatus according to the present embodiment.
FIG. 14 is a diagram illustrating an example of a hardware configuration of a computer that implements functions similar to those of the information processing apparatus according to the present embodiment.

[Description of Embodiments] (DESCRIPTION OF EMBODIMENTS)

Hereinafter, an embodiment of a generating method, a generating program, and an information processing apparatus according to the present embodiment will be explained in detail based on the drawings. This embodiment is not intended to limit the present invention.

Embodiment

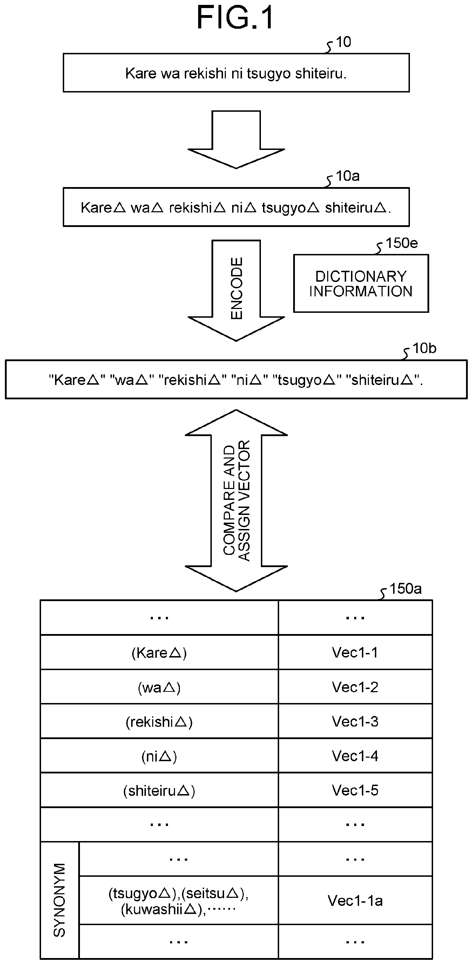

FIG. 1 to FIG. 3 are diagrams for explaining processing of the information processing apparatus according to the present embodiment. In FIG. 1, an example of processing of assigning a vector to each word included in an input sentence by the information processing apparatus will be explained. As illustrated in FIG. 1, when an input sentence 10 is given, the information processing apparatus divides a character string included in the input sentence 10 per word by performing morphological analysis, to generate a divided input sentence 10a. In the divided input sentence 10a, each word is separated by "Δ (space)".

For example, the divided input sentence 10a corresponding to the input sentence 10 "Kare wa rekishi ni tsugyo shiteiru." includes words "KareΔ", "waΔ", "rekishiΔ", "niΔ", "tsugyoΔ", "shiteiruΔ". The information processing apparatus assigns a code to each word, and then assigns each word (code corresponding to the word) to a static code or a dynamic code based on dictionary information 150e.

The dictionary information 150e includes a static dictionary and a dynamic dictionary. The static dictionary is dictionary information that associates a static code and a word with each other. The dynamic dictionary is dictionary information that holds a code (dynamic code) dynamically assigned to a word not included in the static dictionary.

The information processing apparatus converts each word of the divided input sentence 10a into a static code or a dynamic code based on the respective words (codes) of the divided input sentence 10a and the dictionary information 150e, to generate a coded sentence 10b. For example, it is assumed that static codes corresponding to the words "kareΔ", "waΔ", "rekishiΔ", "niΔ", and "shiteiruΔ" are entered in the static dictionary, and the word "tsugyoΔ" is not entered in the static dictionary. It is assumed that a dynamic code corresponding to the word "tsugyo" is entered in the dynamic dictionary.

For convenience of explanation, the static codes assigned to the words "kareΔ", "waΔ", "rekishiΔ", "niΔ", and "shiteiruΔ" are denoted as "(kareΔ)", "(waΔ)", "(rekishiΔ)", "(niΔ)", and "(shiteiruΔ)". The dynamic code assigned to the word "tsugyo" is denoted as "(tsugyoΔ)".

Having generated the encoded sentence 10b, the information processing apparatus compares the respective static codes and dynamic codes of the encoded sentence 10b with a first vector table 150a, and identifies vectors to be assigned to the respective static codes and the respective dynamic codes. The first vector table 150a holds static codes and vectors corresponding to the static codes. The first vector table 150a holds dynamic codes and vectors corresponding to the dynamic codes.

The first vector table 150a classifies dynamic codes that are assigned to words having the occurrence rate lower than a criterion according to the attribute, and assigns an identical vector to the respective dynamic codes belonging to the same attribute. In the present embodiment, as an example, respective words (dynamic codes of the respective words) the occurrence rate of which is lower than a criterion, and that are synonymous with one another are classified into the same attribute. For example, to dynamic codes "(tsugyoΔ)", "(seitsuΔ)", and "(kuwashiiΔ)", a vector "Vec1-1a" is assigned. The occurrence rate of the respective words are identified in advance based on general text information of Aozora Bunko Library and the like. Synonyms are words having the same meaning although the word formations are different, and the same vector can be assigned thereto by using a thesaurus.

The information processing apparatus assigns "Vec1-1" to "(kareΔ)" of the encoded sentence 10b, assigns "Vec1-2" to "(waΔ)", assigns "Vec1-3" to "(rekishiΔ)", assigns "Vec1-4" to "(niΔ)", and assigns "Vec1-5" to "(shiteiruΔ)". The information processing apparatus assigns "Vec1-1a" to "(tsugyoΔ)".

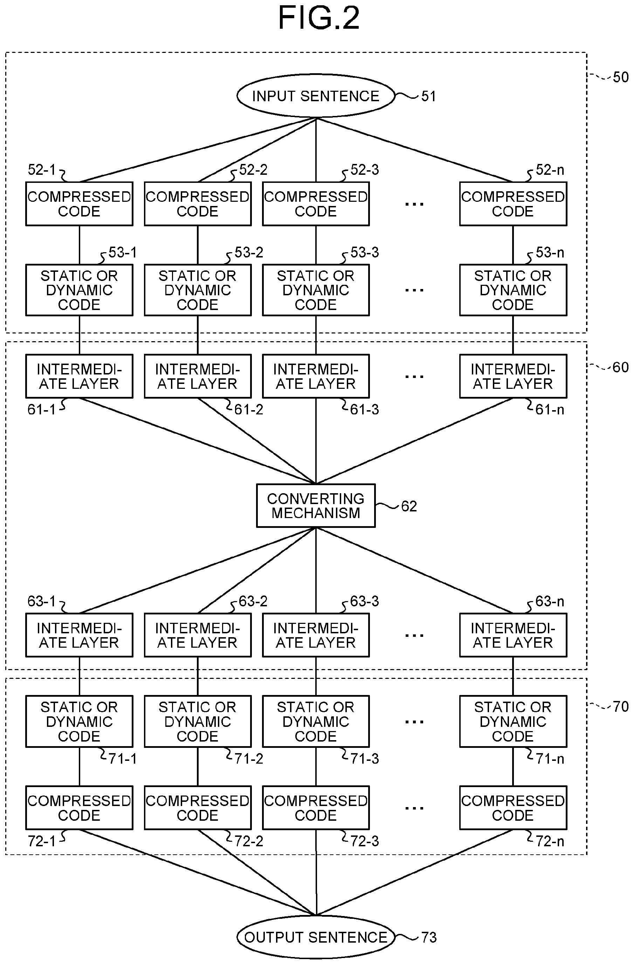

It proceeds to explanation of FIG. 2. The information processing apparatus according to the present embodiment includes an encoder 50, a recurrent neural network (RNN) 60, and a decoder 70. When an input sentence of a first language is input to the encoder 50, an output sentence of a second language is output from the decoder 70 through the RNN 60. In the present embodiment, it will be explained assuming the first language is Japanese and the second language is English, but it is not limited thereto. A vector assigned to a word of the first language is denoted as "first vector", and a vector assigned to a word of the second language is denoted as "second vector".

The encoder 50 is a processing unit that divides words constituting an input sentence, and that converts them into the first vectors, respectively. The RNN 60 is a processing unit that converts, when the plural first vectors are input, the plural first vectors into the second vectors by using parameters set therein. The decoder 70 is a processing unit that decodes an output sentence based on the respective words corresponding to the second vectors output from the RNN 60.

The encoder 50 uses a code conversion table (not illustrated) of the first language, to convert the plural words included in an input sentence 51 into a compressed code enabling to uniquely identify a word and a definition of the word. For example, respective words included in the input sentence 51 are converted into compressed codes 52-1 to 52-n.

The encoder 50 converts the compressed codes 51-1 to 51-n into static codes or dynamic codes 53-1 to 53-n based on the dictionary information (not illustrated) of the first language. The encoder 50 converts a compressed code corresponding to a word of high frequency into a static code, and converts a compressed code corresponding to a word of low frequency into a dynamic code.

The static codes and the dynamic codes 53-1 to 53-n generated by the encoder 50 are information corresponding to local representation. The encoder 50 refers to the first vector table (not illustrated), and converts the respective static codes and the dynamic codes into respective first vectors corresponding thereto. The first vector is information corresponding to distributed representation. The encoder outputs the respective converted first vectors to the RNN 60.

The RNN 60 includes intermediate layers (hidden layers) 61-1 to 61-n, 63-1 to 63-n, and a converting mechanism 62. The intermediate layers 61-1 to 61-n, 63-1 to 63-n are to calculate a value based on a parameter set in itself and an input vector, and to output the calculated value.

The intermediate layer 61-1 accepts input of the first vector of the static code or the dynamic code 53-1, calculates a value based on the accepted vector and a parameter set in itself, and outputs the calculated value to the converting mechanism 62. The intermediate layers 61-2 to 61-n also accept input of the first vector of the static code or the dynamic code similarly, calculate a value based on the accepted vector and a parameter set in itself, and output the calculated value to the converting mechanism 62.

The converting mechanism 62 plays a role of determining a part to be paid attention to when translating a next word, using the respective values input from the intermediate layers 61-1 to 61-n and an internal condition of the decoder 70 and the like as facts on which to base a determination. For example, a probability of paying attention to a value of the intermediate layer 61-1 is 0.2, a probability of paying attention to the intermediate layer 61-2 is 0.3, or the like, and it is normalized such that the total sum of the respective probabilities is to be 1.

The converting mechanism 62 calculates a weighted sum of distributed representation by adding up values acquired by multiplying the values output from the intermediate layers 61-1 to 61-n and respective attentions (probabilities). This is called context vector. The converting mechanism 63 inputs the context vectors to the intermediate layers 63-1 to 63-n. The probabilities to be used at the time of calculation of the respective context vectors input to the intermediate layers 63-1 to 63-n are respectively re-calculated, and parts to be paid attention to change each time.

The intermediate layer 63-1 accepts the context vector from the converting mechanism 62, calculates a value based on the accepted context vector and a parameter set in itself, and outputs the calculated value to the decoder 70. The intermediate layers 63-2 to 63-n also accept the corresponding context vectors similarly, calculate values based on the accepted context vectors and a parameter set in itself, and output the calculated values to the decoder 70.

The decoder 70 refers to the second vector table (not illustrated) for the values (second vectors) output from the intermediate layers 63-1 to 63-n, and converts the second vectors into static codes or dynamic codes 71-1 to 71-n. The second vector table is a table that associates the static code or the dynamic code with the second vector. The second vector is information corresponding to the distributed representation.

The decoder 70 converts the static codes or the dynamic codes 71-1 to 71-n into compressed codes 72-1 to 72-n based on dictionary information (not illustrated) of the second language. The dictionary information of the second language is information in which a compressed code and a static code or a dynamic code of the second language are associated with each other.

The decoder 70 generates an output sentence 73 by converting the compressed codes 72-1 to 72-n into words in the second language by using the conversion table (not illustrated) of the second language.

The information processing apparatus according to the present embodiment accepts a set of an input sentence of the first language to be training data and an output sentence of the second language when parameters of the RNN 60 are trained. The information processing apparatus performs training of the parameters of the RNN 60 such that an output sentence of the training data is to be output from the decoder 70 when the input sentence of the training data is input to the encoder 50.

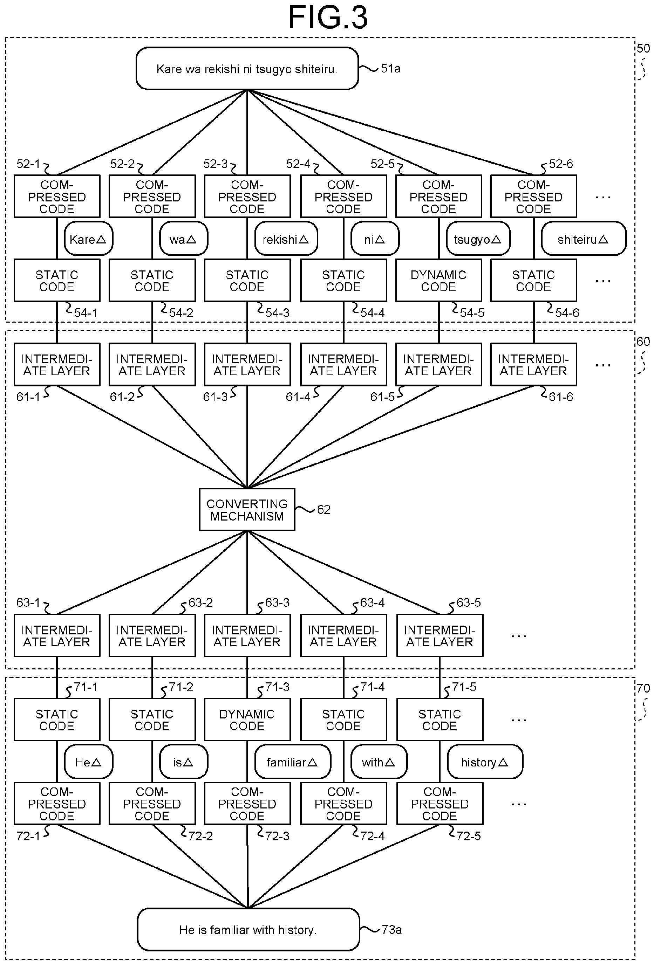

FIG. 3 is a diagram for explaining processing of performing the training of the parameters of the RNN by the information processing apparatus according to the present embodiment. In the example illustrated in FIG. 3, the input sentence "Kare wa rekishi ni tsugyo shiteiru." and the output sentence "He is familiar with history." are used as the training data.

The information processing apparatus performs various processing below based on the input sentence "Kare wa rekishi ni tsugyo shiteiru." of the training data, to calculate the respective first vectors to be input to the respective intermediate layers 61-1 to 61-n of the RNN 60.

The information processing apparatus divides a character string included in the input sentence 51a per word, and generates a divided input sentence (not illustrated). For example, the occurrence rates of the words "kareΔ", "waΔ", "rekishiΔ", "niΔ", and "shiteiruΔ" included in the input sentence 51a are determined to be equal to or higher than a criterion. The occurrence rate of the word "tsugyo" is determined to be lower than the criterion.

The information processing apparatus converts the word "kareΔ" into the compressed code 52-1, and converts the compressed code 52-1 into the static code 54-1. The information processing apparatus identifies the first vector of "kareΔ" based on the static code 54-1 of "kareΔ" and the first vector table, to determine as the first vector to be input to the intermediate layer 61-1.

The information processing apparatus converts the word "waΔ" into the compressed code 52-2, and converts the compressed code 52-2 into the static code 54-2. The information processing apparatus identifies the first vector of "waΔ" based on the static code 54-2 of "waΔ" and the first vector table, to determine as the first vector to be input to the intermediate layer 61-2.

The information processing apparatus converts the word "rekishiΔ" into the compressed code 52-3, and converts the compressed code 52-3 into the static code 54-3. The information processing apparatus identifies the first vector of "rekishiΔ" based on the static code 54-3 of "rekishiΔ" and the first vector table, to determine as the first vector to be input to the intermediate layer 61-3.

The information processing apparatus converts the word "niΔ" into the compressed code 52-4, and converts the compressed code 52-4 into the static code 54-4. The information processing apparatus identifies the first vector of "niΔ" based on the static code 54-4 of "niΔ" and the first vector table, to determine as the first vector to be input to the intermediate layer 61-4.

The information processing apparatus converts the word "tsugyoΔ" into the compressed code 52-5, and converts the compressed code 52-5 into the static code 54-5. For example, the occurrence rate of the word "tsugyo" is assumed to be lower than the criterion. The information processing apparatus identifies the first vector of "tsugyoΔ" based on the static code 54-5 of "tsugyoΔ" and the first vector table, to determine as the first vector to be input to the intermediate layer 61-5.

The information processing apparatus converts the word "shiteiruΔ" into the compressed code 52-6, and converts the compressed code 52-6 into the static code 54-6. The information processing apparatus identifies the first vector of " shiteiru Δ" based on the static code 54-6 of " shiteiru Δ" and the first vector table, to determine as the first vector to be input to the intermediate layer 61-6.

The first vector assigned to "tsugyoΔ" is the same vector as the first vector assigned to the synonyms "seitsu" and "kuwashii" belonging to the same attribute as the "tsugyo".

Subsequently, the information processing apparatus performs following processing based on the output sentence "He is familiar with history." of the training data, and calculates an "most suitable second vector" to be output from the respective intermediate layers 63-1 to 63-4 of the RNN 60. For example, the respective occurrence rates of the words "HeΔ", "isΔ", "withΔ", and "historyΔ" are assumed to be equal to or higher than the criterion. The occurrence rate of the word "familiarΔ" is assumed to be lower than the criterion.

The information processing apparatus divides a character string included in an output sentence 53a, to generate a divided output sentence (not illustrated). The information processing apparatus converts the word "HeΔ" into the compressed code 72-1, and converts the compressed code 72-1 into the static code 71-1. The information processing apparatus identifies the second vector of "HeΔ" based on the static code 72-1 of "HeΔ" and the second vector table, to determine as a value of the ideal second vector to be output from the intermediate layer 63-1.

The information processing apparatus converts the word "isΔ" into the compressed code 72-2, and converts the compressed code 72-2 into the static code 71-2. The information processing apparatus identifies the second vector of "isΔ" based on the static code 72-2 of "isΔ" and the second vector table, to determine as a value of the ideal second vector to be output from the intermediate layer 63-2.

The information processing apparatus converts the word "familiarΔ" into the compressed code 72-3, and converts the compressed code 72-3 into the static code 71-3. The information processing apparatus identifies the second vector of "familiarΔ" based on the static code 72-3 of "familiarΔ" and the second vector table, to determine as a value of the ideal second vector to be output from the intermediate layer 63-3.

The information processing apparatus converts the word "withΔ" into the compressed code 72-4, and converts the compressed code 72-4 into the static code 71-4. The information processing apparatus identifies the second vector of "withΔ" based on the static code 72-4 of "withΔ" and the second vector table, to determine as a value of the ideal second vector to be output from the intermediate layer 63-4.

The information processing apparatus converts the word "historyΔ" into the compressed code 72-5, and converts the compressed code 72-5 into the static code 71-5. The information processing apparatus identifies the second vector of "historyΔ" based on the static code 72-5 of "historyΔ" and the second vector table, to determine as a value of the ideal second vector to be output from the intermediate layer 63-5.

As described above, the information processing apparatus identifies the respective first vectors to be input to the respective intermediate layers 61-1 to 61-n of the RNN 60 and the ideal second vectors to be output from the respective intermediate layers 63-1 to 63-n of the RNN 60. The information processing apparatus performs processing of adjusting parameters of the RNN 60 such that the second vectors output from the respective intermediate layers 63-1 to 63-n when the respective identified first vectors are input to the respective intermediate layers 61-1 to 61-n of the RNN 60 approach the ideal second vectors.

Not to degrade the translation accuracy, it is desirable to assign a unique vector preferentially to a word, the occurrence rate of which is equal to or higher than a criterion (a word of high frequency, a word of intermediate frequency). Therefore, the information processing apparatus of the present embodiment assigns a unique vector to words of high frequency and intermediate frequency, and assigns an identical vector to a synonym of low frequency, thereby reducing the amount of data. Thus, it is possible to reduce an amount of data of vector information that is used for generation of a conversion model without degrading the translation accuracy.

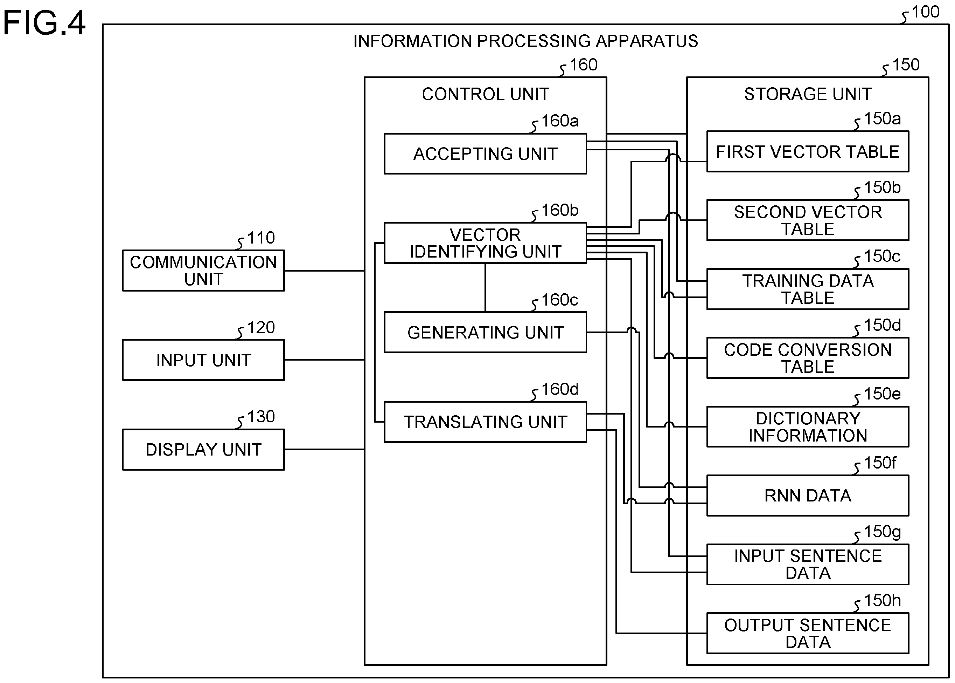

Next, a configuration of the information processing apparatus according to the present embodiment will be explained. FIG. 4 is a functional block diagram illustrating a configuration of the information processing apparatus according to the present embodiment. As illustrated in FIG. 4, an information processing apparatus 100 includes a communication unit 110, an input unit 120, a display unit 130, a storage unit 150, and a control unit 160.

The communication unit 110 is a processing unit that performs data communication with an external device through a network. The communication unit 110 is an example of a communication device. For example, an information processing apparatus 100 may be connected to an external device through a network, and may receive a training data table 150c and the like from the external device.

The input unit 120 is an input device to input various kinds of information to the information processing apparatus 100. For example, the input unit 120 corresponds to a keyboard, a mouse, a touch panel, and the like.

The display unit 130 is a display device to display various kinds of information output from the control unit 160. For example, the display unit 130 corresponds to a liquid crystal display, a touch panel, and the like.

The storage unit 150 has the first vector table 150a, a second vector table 150b, the training data table 150c, a code conversion table 150d, the dictionary information 150e, and RNN data 150f. Moreover, the storage unit 150 has input sentence data 150g, and output sentence data 150h. The storage unit 150 corresponds to a semiconductor memory device, such as a random access memory (RAM), a read only memory (ROM), and a flash memory, and a storage device, such as a hard disk drive (HDD).

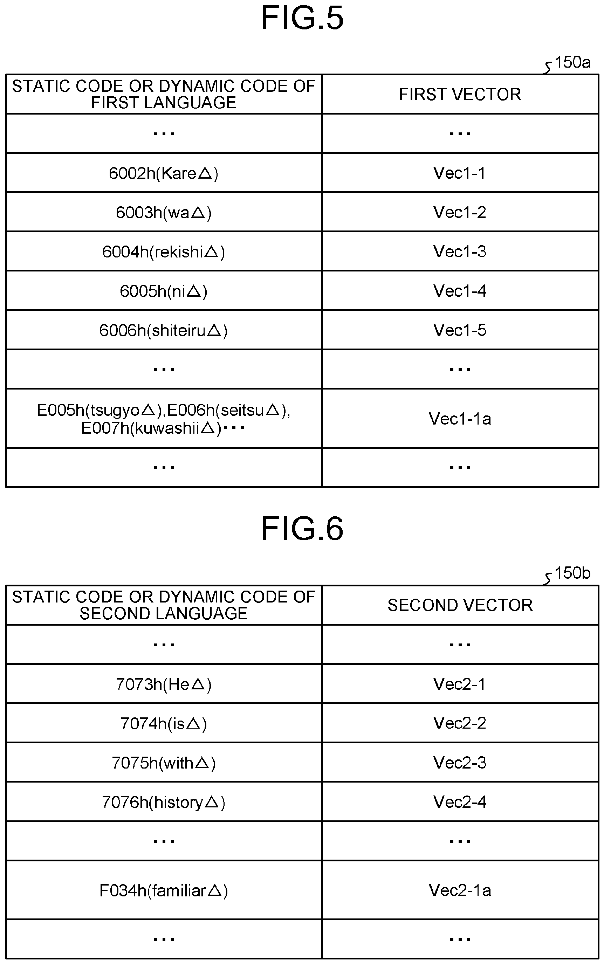

FIG. 5 is a diagram illustrating an example of a data structure of a first vector table according to the present embodiment. As illustrated in FIG. 5, the first vector table 150a associates a word of the first language (a static code, a dynamic code of a word) and the first vector with each other. For example, the first vector associated with a static code "6002h" of the word of the first language "kareΔ" is "Vec1-1".

Moreover, respective dynamic codes corresponding to synonyms of low frequency can be regarded as to belong to the same attribute. For example, to a dynamic code "E005h" of the word "tsugyoΔ", a dynamic code "E006h" of "seitsuΔ", and a dynamic code "E007h" of "kuwashiiΔ", the first vector "Vec1-1a" is assigned.

FIG. 6 is a diagram illustrating an example of a data structure of the second vector table according to the present embodiment. As illustrated in FIG. 6, the second vector table 150b associates a word of the second language (a static code, a dynamic code of a word) with the second vector with each other. For example, the first vector assigned to a static code "7073h" of the word of the second language "HeΔ" is "Vec2-1".

Moreover, to a dynamic code "F034h (familiar" of low frequency, the second vector is assigned. Although not illustrated in FIG. 6, also for the second language, when synonyms of low frequency are included, the identical second vector is assigned to respective dynamic codes corresponding to the synonyms of low frequency. The respective dynamic codes corresponding to the synonyms of low frequency can be regarded as belonging to the same attribute.

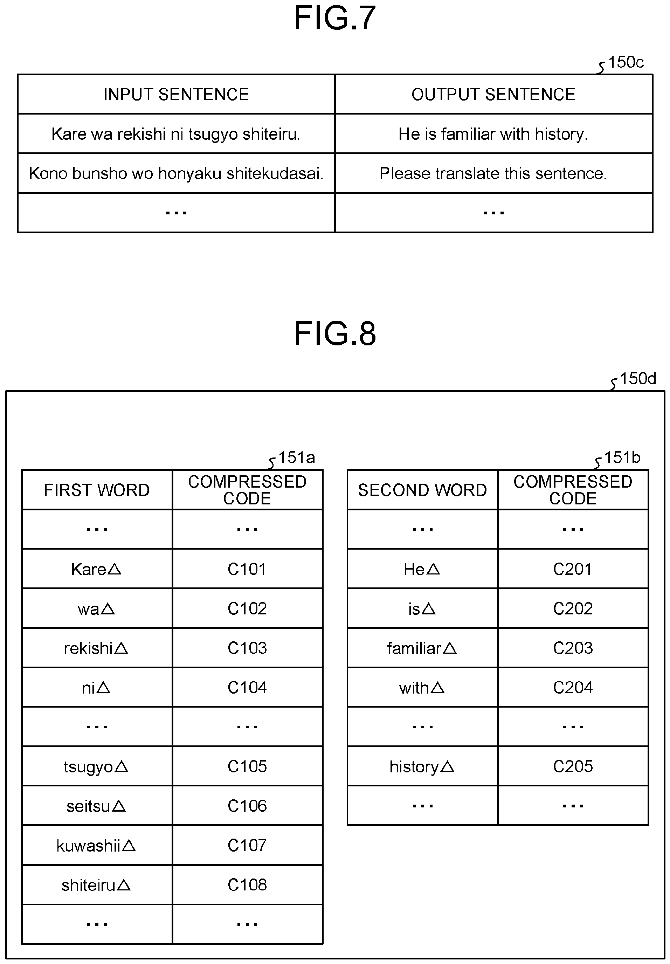

The training data table 150c is a table that holds a set of an input sentence and an output sentence to be training data. FIG. 7 is a diagram illustrating an example of a data structure of the training data table according to the present embodiment. As illustrated in FIG. 7, this training data table 150c associates an input sentence and an output sentence with each other. For example, it is indicated that an appropriate output when the input sentence described in the first language "Kare wa rekishi ni tsugyo shiteiru." is translated into the second language is "He is familiar with history." by training data.

The code conversion table 150d is a table that associates a word and a compressed code with each other. FIG. 8 is a diagram illustrating an example of a data structure of the code conversion table according to the present embodiment. As illustrated in FIG. 8, this code conversion table 150d has a table 151a and a table 151b.

The table 151a associates a word of the first language and a compressed code with each other. For example, the word "kareΔ" is associated with a compressed code "C101".

The table 151b associates a word of the second language and a compressed code with each other. For example, the word "HeΔ" is associated with a compressed code "C201". Note that a single compressed code may be assigned to a compound word constituted of plural words. In the example illustrated in FIG. 8, with the word "familiar", a compressed code "C205" is associated.

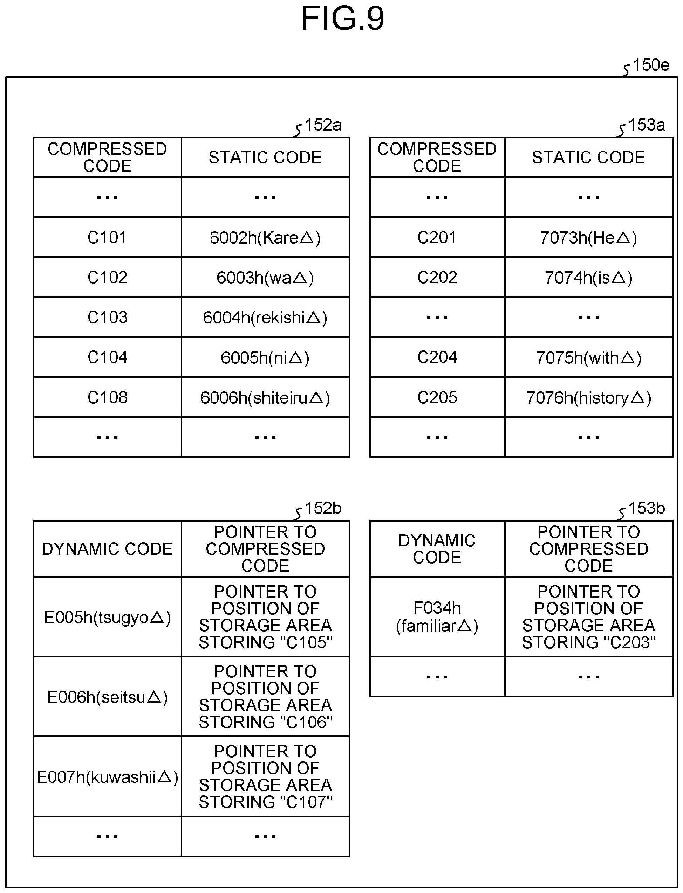

The dictionary information 150e is a table that associates a static code and a dynamic code corresponding to a compressed code with each other. FIG. 9 is a diagram illustrating an example of a data structure of the dictionary information according to the present embodiment. As illustrated in FIG. 9, the dictionary information 150e has a table 152a, a table 152b, a table 153a, and a table 153b.

The table 152a is a static dictionary that associates a compressed code of the first language and a static code with each other. For example, the compressed code "C101" is associated with the static code "6002h (kareΔ)".

The table 152b is a dynamic dictionary that associates a compressed code of the first language and a dynamic code with each other. As illustrated in FIG. 9, the table 152b associates a dynamic code with a pointer to a compressed code. For example, to a compressed code having no match among compressed codes in the table 152a, a unique dynamic code is assigned, and is set to a dynamic code in the table 152b. Moreover, a compressed code to which a dynamic code is assigned is stored in a storage area (not illustrated), and a pointer to a storage position is entered in the table 152b.

For example, when there is no match for the compressed code "C105" among the compressed codes in the table 152a, the dynamic code "E005h (tsugyoΔ)" is assigned to the compressed code "C105", and is entered in the table 152b. The compressed code "C105" is stored in a storage area (not illustrated), and a pointer corresponding to a position in which the compressed code "C105" is stored is entered in the table 152b.

The table 153a is a static dictionary that associates a compressed code of a word of the second language and a static code with each other. For example, the compressed code "C201" is associated with the static code "7073h (HeΔ)".

The table 153b is a dynamic dictionary that associates a compressed code of a word of the second language and a dynamic code with each other. As illustrated in FIG. 9, the table 153b associates a dynamic code with a pointer to a compressed code. For example, to a compressed code having no match among compressed codes in the table 153b, a unique dynamic code is assigned, and is set to a dynamic code in the table 153b. Moreover, the compressed code to which a dynamic code is assigned is stored in a storage area (not illustrated), and a pointer to a storage position is entered in the table 153b.

For example, when there is no match for the compressed code "C203" among the compressed codes in the table 153a, the dynamic code "F034h (familiarΔ)" is assigned to the compressed code "C203", and is entered in the table 153b. The compressed code "C203" is stored in a storage area (not illustrated), and a pointer corresponding to a position in which the compressed code "C203" is stored is entered in the table 153b.

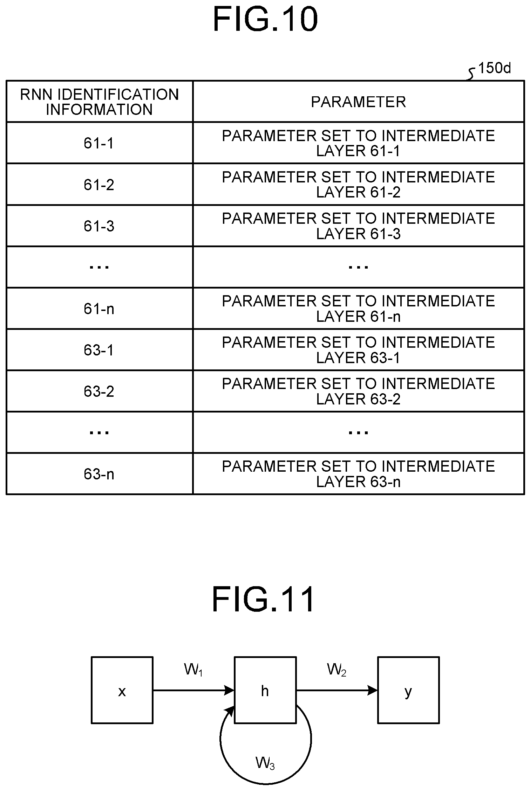

The RNN data 150f is a table that holds parameters set in the respective intermediate layers of the RNN 60 explained in FIGS. 2, 3, and the like. FIG. 10 is a diagram illustrating an example of a data structure of the RNN data according to the present embodiment. As illustrated in FIG. 10, this RNN data 150f associates RNN identification information and a parameter with each other. The RNN identification information is information to uniquely identify an intermediate layer of the RNN 60. The parameter indicates a parameter set in a corresponding intermediate layer. The parameter corresponds to a bias value of an activating function, a weight, and the like set in an intermediate layer.

The example in which the dynamic code "F034h (familiar)" is assigned to the compressed code "C203" has been explained for convenience, but a static code may be assigned.

FIG. 11 is a diagram for supplementary explanation for a parameter of the intermediate layer. FIG. 11 includes an input layer "x", an intermediate layer (hidden layer) "h", and an output layer (y). The intermediate layer "h" corresponds to the intermediate layers 61-1 to 61-n, 63-1 to 63-n illustrated in FIG. 2.

A relation between the intermediate layer "h" and the input layer "x" is defined by Equation (1) by using an activating function f. $W_1$, $W_3$ in Equation (1) are weights adjusted to optimal values by training with training data. t indicates time (how many words have read).

$$h_t = f(W_1 x_t + W_3 h_{t-1}) \qquad\qquad (1)$$

A relation between the intermediate layer "h" and the output layer "y" is defined by Equation (2) by using an activating function g. $W_2$ in Equation (2) is a weight adjusted to an optical value by training with training data. As the activating function g, the softmax function may be used.

$$y_t = g(W_2 h_t) \qquad\qquad (2)$$

The input sentence data 150g is data of an input sentence to be a subject to translation. The output sentence data 150h is data that is acquired by translating the input data 150g.

Returning back to explanation of FIG. 5, the control unit 160 includes an accepting unit 160a, a vector identifying unit 160b, a generating unit 160c, and a translating unit 160d. The control unit 160 can be implemented by a central processing unit (CPU), a micro processing unit (MPU), or the like. Moreover, the control unit 160 can also be implemented by a hardwired logic, such as an application specific integrated circuit (ASIC) and a field programmable gate array (FPGA). Processing of the encoder 50, the RNN 60, and the decoder 70 explained in FIG. 2, FIG. 3 is implemented by the control unit 160. The vector identifying unit 160b, the generating unit 160c, and the translating unit 160d are one example of a generation processing unit.

First, processing when the information processing unit 100 according to the present embodiment performs training of the RNN data 150f to be a parameter of the RNN 60 will be explained. When the RNN data 150f is trained, the accepting unit 160a, the vector identifying unit 160b, and the generating unit 160c out of the respective processing units of the control unit 160 operate.

The accepting unit 160a is a processing unit that accepts the training data table 150c from an external device through a network. The accepting unit 160a stores the accepted training data table 150c in the storage unit 150. The accepting unit 160a may accept the training data table 150c from the input unit 120.

The vector identifying unit 160b is a processing unit that identifies the first vectors to be assigned to the respective words of the input sentence of the training data table 150c, and the second vectors to be assigned to the respective words of the output sentence. The vector identifying unit 160b outputs information about the first vectors and the second vectors to the generating unit 160c.

For example, when a word, the occurrence rate of which is lower than a criterion is included among respective words of the input sentence, the vector identifying unit 160b identifies an attribute associated with the word, the occurrence rate of which is lower than the criterion, and identifies the first vector to be associated with the identified attribute.

When a word, the occurrence rate of which is lower than a criterion is included among respective words of the output sentence, the vector identifying unit 160b identifies an attribute associated with the word, the occurrence rate of which is lower than the criterion, and identifies the second vector to be associated with the identified attribute.

In the following, an example of processing of the vector identifying unit 160b will be explained. The vector identifying unit 160b performs processing of converting into a compressed code, processing of converting into a static code or a dynamic code, and processing of identifying a vector.

An example of the "processing of converting into a compressed code" performed by the vector identifying unit 160b will be explained. The vector identifying unit 160b acquires information of an input sentence from the training data table 150c, and performs morphological analysis, to generate a divided input sentence in which a character string included in the input sentence is divided per word. The vector identifying unit 160b compares the respective words included in the divided input sentence with the table 151a of the code conversion table 150d, and converts the respective words into compressed codes. For example, the vector identifying unit 160b converts the word "kareΔ" into the compressed code "C101".

The vector identifying unit 160b acquires information about an output sentence from the training data table 150c, and performs morphological analysis, to generate a divided output sentence in which a character string included in the output sentence is divided per word. The vector identifying unit 160b compares the respective words included in the divided output sentence with the table 151b of the code conversion table 150d, and converts the respective words into compressed codes. For example, the vector identifying unit 160b converts the word "HeΔ" into the compressed code "C201".

Subsequently, the "processing of converting into a static code or a dynamic code" performed by the vector identifying unit 160b will be explained. The vector identifying unit 160b compares the respective compressed codes converted from the divided input sentence with the table (static dictionary) 152a. The vector identifying unit 160b converts a compressed code having a match among compressed codes in the table 152a out of the compressed codes of the divided in put sentence into a static code. In the following explanation, a static code generated from a word of a divided input sentence will be denoted as "first static code".

The vector identifying unit 160b converts a compressed code having no match among the compressed codes in the table 152a out of the compressed codes of the divided input sentence into a dynamic code. The vector identifying unit 160b compares the compressed code with the table (dynamic dictionary) 152b, and converts the compressed code that has already been entered in the table 152b into a dynamic code entered in the table 152b. On the other hand, when the compressed code is not entered in the table 152b, the vector identifying unit 160b generates a dynamic code, and converts, after entering in the table 152b, into the entered dynamic code. In the following explanation, a dynamic code generated from a word of a divided input sentence is denoted as "first dynamic code".

The vector identifying unit 160b compares respective compressed codes converted from the divided output sentence with the table (static dictionary) 153a. The vector identifying unit 160b converts a compressed code having a match among compressed codes in the table 153a out of the compressed codes of the divided output sentence into a static code. In the following explanation, a static code generated from a word of a divided output sentence is denoted as "second static code".

The vector identifying unit 160b converts a compressed code having no match among the compressed codes of the table 153a out of the compressed codes of the divided output sentence into a dynamic code. The vector identifying unit 160b compares the compressed code with the table (dynamic dictionary) 153b, and converts a compressed code that has already been entered in the table 153b into a dynamic code entered in the table 153b. On the other hand, when the compressed code is not entered in the table 153b, the vector identifying unit 160b generates a dynamic code, and converts, after entering in the table 153b, into the entered dynamic code. In the following explanation, a dynamic code generated from a word of a divided output sentence is denoted as "second dynamic code".

Subsequently, an example of the "processing of identifying a vector" performed by the vector identifying unit 160b will be explained. The vector identifying unit 160b compares the first static code with the first vector table 150a, and identifies the firs vector corresponding to the first static code. Moreover, the vector identifying unit 160b compares the first dynamic code with the first vector table 150a, and identifies the first vector corresponding to an attribute to which the first dynamic code belongs. For the first static codes, respective unique first vectors are identified. On the other hand, for respective first dynamic codes belonging to the same attribute, a single first vector assigned to the attribute is identified.

The vector identifying unit 160b compares the second static code with the second vector table 150b, and identifies the second vector corresponding to the second static code. Moreover, the vector identifying unit 160b compares the second dynamic code with the second vector table 150b, and identifies the second vector corresponding to the attribute to which the second dynamic code belongs. For the respective second dynamic codes, respective unique second vectors are identified. On the other hand, for the respective second static codes belonging to the same attribute, a single second vector assigned to the attribute is identified.

The vector identifying unit 160b generates the first vectors corresponding to the respective words of the input sentence and the second vectors corresponding to respective words of the output sentence by performing the above processing. The vector identifying unit 160b outputs information about the generated first vectors and second vectors to the generating unit 160c.

The generating unit 160c is a processing unit that generates a conversion model by training parameters of the conversion model based on the first vectors and the second vectors identified by the vector identifying unit 160b. The training of parameters is performed by the following processing, and the trained parameters are entered in the RNN data 150f. The RNN 60 calculating a value based on the parameters of this RNN data 150f corresponds to the conversion model.

For example, the generating unit 160c inputs the respective first vectors to the intermediate layers 61-1 to 61-n of the RNN 60, using the parameters of the respective intermediate layers entered in the RNN data 150f, and calculates respective vectors output from the intermediate layers 63-1 to 63-n. The generating unit 160c performs training of the parameters of the intermediate layers entered in the RNN data 150f such that the respective vectors output from the intermediate layers 63-1 to 63-n of the RNN 60 approach the respective second vectors.

The generating unit 160c may perform training by adjusting the parameters of the respective intermediate layers such that differences are minimized by using a cost function in which differences between the respective vectors output from the intermediate layers 63-1 to 63- n and the second vectors are defined.

Subsequently, processing of generating output sentence data that is a deliverable of translation of input sentence data by using the trained RNN data 150f (generated conversion model) performed by the information processing apparatus 100 according to the present embodiment will be explained. When translation processing is performed, the accepting unit 160a, the vector identifying unit 160b, and the translating unit 160d out of the respective processing units of the control unit 160 operate.

The accepting unit 160a accepts the input sentence data 150g from an external device through a network. The accepting unit 160a stores the accepted input sentence data in the storage unit 150.

The vector identifying unit 160b identifies the first vectors corresponding to respective words of an input sentence included in the input sentence data 150g. When a word, the occurrence rate of which is lower than a criterion is included, the vector identifying unit 160b identifies an attribute associated with the word, the occurrence rate of which is lower than the criterion, and identifies the first vector to be assigned to the identified attribute. The vector identifying unit 160b outputs information of the first vector identified based on the input sentence data 150g to the translating unit 160d.

The translating unit 160d inputs the respective first vectors to the respective intermediate layers 61-1 to 61-n of the RNN 60 by using parameters of the respective intermediate layers 61-1 to 63-n entered in the RNN data 150f. The translating unit 160d converts the respective first vectors into the respective second vectors by acquiring the respective second vectors output from the intermediate layers 63-1 to 63-n of the RNN 60.

The translating unit 160d generates the output sentence data 150h by using the respective second vectors converted from the respective first vectors. The translating unit 160d compares the respective second vectors with the second vector table 150b, to identify a static code and a dynamic code corresponding to the respective second vectors. The translating unit 160d respectively identifies words corresponding to the static code and the dynamic code based on the static code and the dynamic code, and the dictionary information 150e, and the code conversion table 150d.

The translating unit 160d may send the output sentence data 150h to the external device, or may output it to the display unit 130 to be displayed thereon.

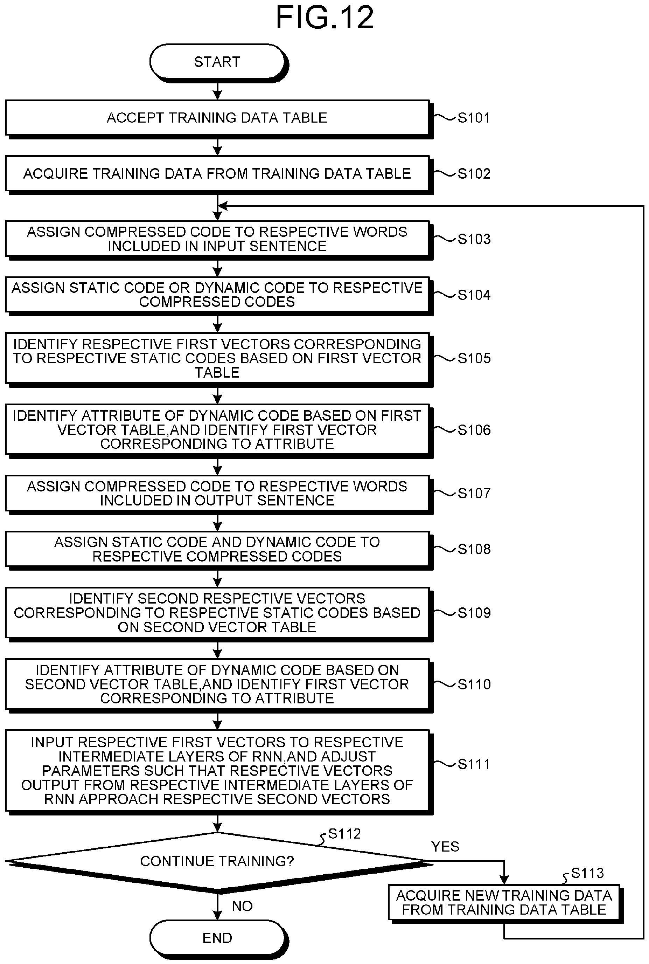

Next, an example of processing of generating the RNN data by the information processing apparatus 100 according to the present embodiment will be explained. FIG. 12 is a flowchart illustrating processing of generating the RNN data by the information processing apparatus according to the present embodiment. As illustrated in FIG. 12, the accepting unit 160a of the information processing apparatus 100 accepts the training data table 150c from an external device (step S101).

The vector identifying unit 160b of the information processing apparatus 100 acquires training data from the training data table 150c (step S102). The vector identifying unit 160b assigns compressed codes to respective words included in an input sentence (step S103). The vector identifying unit 160b assigns the static code and the dynamic code to the respective compressed codes (step S104).

The vector identifying unit 160b identifies the respective first vectors corresponding to the respective static codes based on the first vector table 150a (step S105). The vector identifying unit 160b identifies an attribute of the dynamic code based on the first vector table 150a, and identifies the first vector corresponding to the attribute (step S106).

The vector identifying unit 160b assigns compressed codes to the respective words included in an output sentence (step S107). The vector identifying unit 160b assigns the static code and the dynamic code to the respective compressed code (step S108).

The vector identifying unit 160b identifies the second vectors corresponding to the respective static codes based on the second vector table 150b (step S109). The vector identifying unit 160b identifies an attribute of the dynamic code based on the second vector table 150b, and identifies the second vector corresponding to the attribute (step S110).

The generating unit 160c of the information processing apparatus 100 inputs the respective first vectors to the respective intermediate layers, and adjusts parameters such that the respective vectors output from the respective intermediate layers of the RNN approach the respective second vectors (step S111).

The information processing apparatus 100 determines whether to continue the training (step S112). When the training is not to be continued (step S112: NO), the information processing apparatus 100 ends the processing. When the training is to be continued (step S112: YES), the information processing apparatus 100 shifts to step S113. The vector identifying unit 160b acquires new training data from the training data table 150c (step S113), and shifts to step S103.

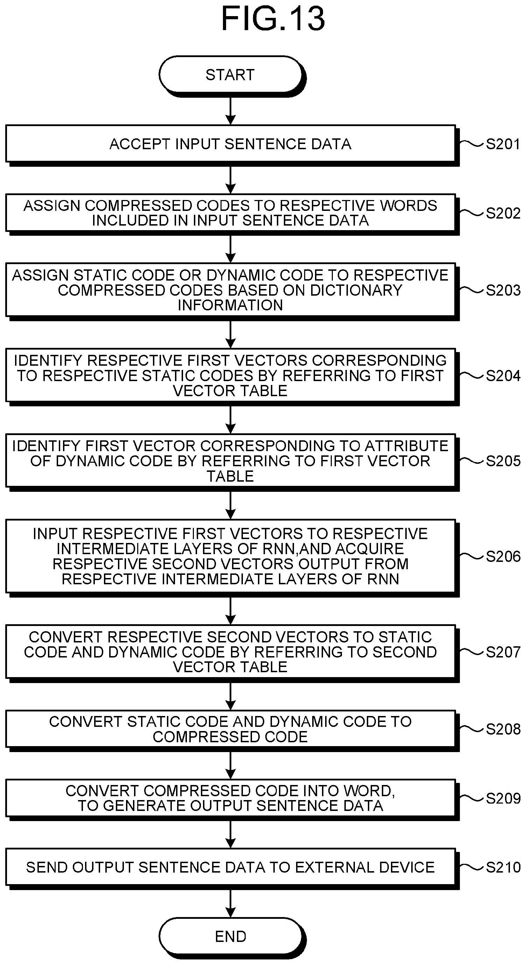

Next, an example of processing of translating input sentence data by the information processing apparatus 100 according to the present embodiment will be explained. FIG. 13 is a flowchart illustrating processing of translating input sentence data by the information processing apparatus according to the present embodiment. The accepting unit 160a of the information processing apparatus 100 accepts the input sentence data 150g from an external device (step S201).

The vector identifying unit 160b of the information processing apparatus 100 assigns compressed codes to respective words included in the input sentence data 150g (step S202). The vector identifying unit 160b assigns the static code and the dynamic code to the respective compressed codes based on the dictionary information 150e (step S203).

The vector identifying unit 160b refers to the first vector table 150a, and identifies the respective first vectors corresponding to the respective static codes (step S204). The vector identifying unit 160b refers to the first vector table 150a, and identifies the first vector corresponding to an attribute of the dynamic code (step 205).

The translating unit 160d of the information processing apparatus 100 inputs the respective first vectors to the respective intermediate layers of the RNN, and acquires the respective second vectors output from the respective intermediate layers (step S206). The translating unit 160d refers to the second vector table 150b, and converts the respective second vectors into the static code and the dynamic code (step S207).

The translating unit 160d converts the static code and the dynamic code into compressed codes based on the dictionary information 150e (step S208). The translating unit 160d converts the compressed code into a word based on the code conversion table 150d, to generate the output sentence data 150h (step S209). The translating unit 160d sends the output sentence data 150h to the external device (step S210).

Next, an effect of the information processing apparatus according to the present embodiment will be explained. Not to degrade the translation accuracy, it is desirable to assign a unique vector preferentially to a word, the occurrence rate of which is equal to or higher than a criterion (a word of high frequency, a word of intermediate frequency). Therefore, the information processing apparatus of the present embodiment assigns a unique vector to a word of high frequency or intermediate frequency. On the other hand, to a word, the occurrence rate of which is lower than the criterion (a word of low frequency), an identical vector to its synonym is assigned, and the amount of data is thereby reduced. Thus, it is possible to reduce an amount of data of vector information that is used for generation of a conversion model without degrading the translation accuracy.

In the present embodiment, the case in which words of low frequency are included both the input sentence and the output sentence to be training data has been explained as an example, it is not limited thereto. For example, in an input sentence and an output sentence to be training data, a conversion model (the RNN data 150f) can be generated similarly also in a case in which a word of low frequency is included only in the input sentence, or in a case in which a word of low frequency is included only in the output sentence.

Moreover, when an input sentence to be a subject to translation is accepted, the information processing apparatus 100 assigns a unique vector to a word equal to or higher than a criterion, out of words included in the input sentence. On the other hand, to a word lower than a criterion, an identical vector to other synonyms is assigned. The information processing apparatus 100 can generate an appropriate output sentence by inputting the vectors assigned to the respective words of the input sentence by the above processing to the RNN 60, and by using vectors output from the RNN 60.

For example, the information processing apparatus assigns a single vector to words of low frequency. Thus, it is possible to reduce an amount of data of the vector table while simplifying classification of words of low frequency per attribute.

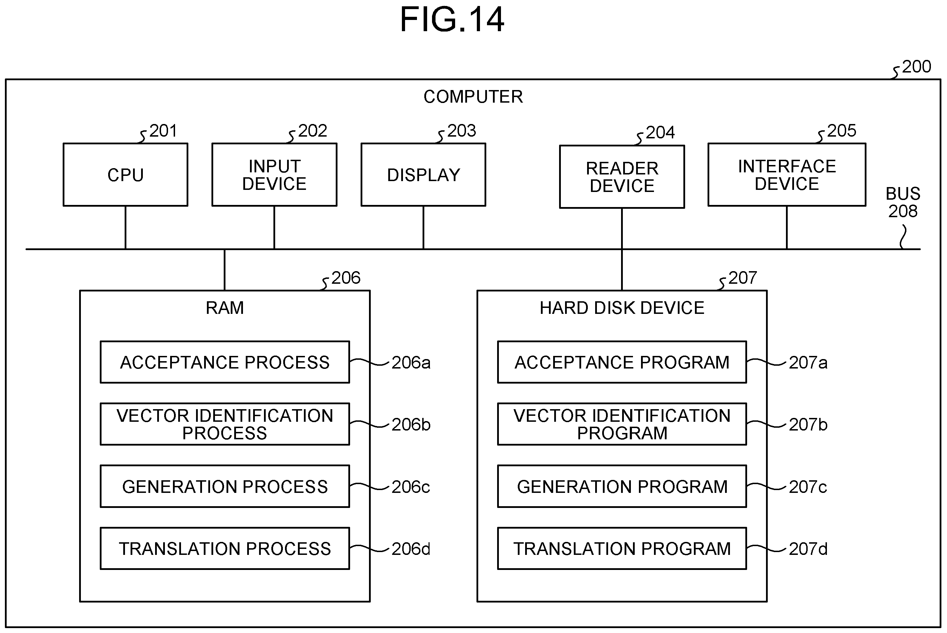

Next, an example of a hardware configuration of a computer that implements functions similar to those of the information processing apparatus 100 described in the embodiment will be explained. FIG. 14 is a diagram illustrating an example of a hardware configuration of a computer that implements functions similar to those of the information processing apparatus according to the present embodiment.

As illustrated in FIG. 14, a computer 200 includes a CPU 201 that performs various kinds of arithmetic processing, an input device 202 that accepts an input of data from a user, and a display 203. Moreover, the computer 200 includes a reader device 204 that reads a program and the like from a storage medium, and an interface device 205 that performs communication of data with an external device, and the like through a wired or wireless network. The computer 200 includes a RAM 206 that temporarily stores various kinds of information, and a hard disk device 207. The respective devices 201 to 207 are connected to a bus 208.

The hard disk device 207 includes an acceptance program 207a, a vector identification program 207b, a generation program 207c, and a translation program 207d. The CPU 201 reads the acceptance program 207a, the vector identification program 207b, the generation program 207c, and the translation program 207d, and loads on the RAM 206.

The acceptance program 207a functions as an acceptance process 206a. The vector identification program 207b functions as a vector identification process 206b.
The generation program 207c functions as a generation process 206c. The translation program 207d functions as a translation process 206d.

Processing of the acceptance process 206a corresponds to the processing of the accepting unit 160a. Processing of the vector identification process 206b corresponds to the processing of the vector identifying unit 160b. Processing of the generation process 206c corresponds to the processing of the generating unit 160c. Processing of the translation process 206d corresponds to the processing of the translating unit 160d.

For example, the respective programs 207a to 207d are stored in a "portable physical medium", such as a flexible disk (FD), a CD-ROM, a DVD disk, a magneto-optical disk, and an IC card, that is inserted in to the computer 200. It may be configured such that the computer 200 reads the respective programs 207a to 207d therefrom, and executes them.

Reference Signs List

| | |
|---|---|
| 100 | INFORMATION PROCESSING APPARATUS |
| 110 | COMMUNICATION UNIT |
| 120 | INPUT UNIT |
| 130 | DISPLAY UNIT |
| 150 | STORAGE UNIT |
| 150a | FIRST VECTOR TABLE |
| 150b | SECOND VECTOR TABLE |
| 150c | TRAINING DATA TABLE |
| 150d | CODE CONVERSION TABLE |
| 150e | DICTIONARY INFORMATION |
| 150f | RNN DATA |
| 150g | INPUT SENTENCE DATA |
| 150h | OUTPUT SENTENCE DATA |
| 160 | CONTROL UNIT |
| 160a | ACCEPTING UNIT |
| 160b | VECTOR IDENTIFYING UNIT |
| 160c | GENERATING UNIT |
| 160d | TRANSLATING UNIT |

**Claims**

1. A generating method in which a computer performs processing of:

   accepting first text information and second text information;
   extracting a word, an occurrence rate of which is lower than a criterion out of words included in the first text information, and a word, an occurrence rate of which is lower than a criterion out of words included in the second text information;
   identifying an attribute that is assigned to the extracted word by referring to a storage unit storing information in which a single attribute is assigned to a plurality of words, an occurrence rate of which is lower than a criterion;
   identifying first vector information that is associated with an attribute of the word extracted from the first text information, and second vector information that is associated with an attribute of the word extracted from the second text information, by referring to a storage unit that stores vector information according to an attribute of a word, associating with the attribute; and
   generating a conversion model by performing training of parameters of the conversion model such that vector information output when the first vector information is input to the conversion model approaches the second vector information.

2. The generating method according to claim 1, wherein
   the accepting accepts third text information,
   the extracting extracts a word included in the third text information,
   the storage unit stores vector information according to a word, an occurrence rate of which is equal to or higher than a criterion,
   the identifying identifies third vector information associated with a word included in the third text information, by referring to the storage unit, and
   the generating generates the conversion model by performing training of parameters of the conversion model such that vector information output when the first vector information is input to the conversion model approaches the third vector information.

**3.** The generating method according to claim 1, wherein
the accepting accepts text information of a subject to translation,
the extracting extracts a plurality of words included in the text information of the subject to translation,
the identifying identifies vector information that is associated with an attribute of a word, an occurrence rate of which is lower than a criterion for a word, an occurrence rate of which is lower than the criterion out of the words, and identifies vector information associated with a word, an occurrence rate of which is equal to or higher than a criterion for a word, an occurrence rate of which is equal to or higher than the criterion, by referring to the storage unit, and the process further comprising
generating text information based on a plurality of pieces of vector information output from the conversion model when a plurality of pieces of the vector information identified by the processing of identifying are input to the conversion model.

**4.** The generating method according to any one of claims 1, 2, and 3, wherein
the storage unit associates a single piece of vector information to synonyms, an occurrence rate of which is lower than a criterion.

**5.** A generating program that causes a computer to execute processing of:

accepting first text information and second text information;
extracting a word, an occurrence rate of which is lower than a criterion out of words included in the first text information, and a word, an occurrence rate of which is lower than a criterion out of words included in the second text information;
identifying an attribute that is assigned to the extracted word by referring to a storage unit storing information in which a single attribute is assigned to a plurality of words, an occurrence rate of which is lower than a criterion;
identifying first vector information that is associated with an attribute of the word extracted from the first text information, and second vector information that is associated with an attribute of the word extracted from the second text information, by referring to a storage unit that stores vector information according to an attribute of a word, associating with the attribute; and
generating a conversion model by performing training of parameters of the conversion model such that vector information output when the first vector information is input to the conversion model approaches the second vector information.

**6.** The generating program according to claim 5, wherein
the accepting accepts third text information,
the extracting extracts a word included in the third text information,
the storage unit stores vector information according to a word, an occurrence rate of which is equal to or higher than a criterion,
the identifying identifies third vector information associated with a word included in the third text information, by referring to the storage unit, and
the generating generates the conversion model by performing training of parameters of the conversion model such that vector information output when the first vector information is input to the conversion model approaches the third vector information.

**7.** The generating program according to claim 5, wherein
the accepting accepts text information of a subject to translation,
the extracting extracts a plurality of words included in the text information of the subject to translation,
the identifying identifies vector information that is associated with an attribute of a word, an occurrence rate of which is lower than a criterion for a word, an occurrence rate of which is lower than the criterion out of the words, and identifies vector information associated with a word, an occurrence rate of which is equal to or higher than a criterion for a word, an occurrence rate of which is equal to or higher than the criterion, by referring to the storage unit, and process further comprising
generating text information based on a plurality of pieces of vector information output from the conversion model when a plurality of pieces of the vector information identified by the processing of identifying are input to the conversion model.

**8.** The generating program according to any one of claims 5, 6, and 7, wherein
the storage unit associates a single piece of vector information with synonyms, an occurrence rate of which is lower than a criterion.

9. An information processing apparatus comprising:

an accepting unit that accepts first text information and second text information; and
a generation processing unit that extracts a word, an occurrence rate of which is lower than a criterion out of words included in the first text information, and a word, an occurrence rate of which is lower than a criterion out of words included in the second text information, that identifies an attribute that is assigned to the extracted word by referring to a storage unit storing information in which a single attribute is assigned to a plurality of words, an occurrence rate of which is lower than a criterion, that identifies first vector information that is associated with an attribute of the word extracted from the first text information, and second vector information that is associated with an attribute of the word extracted from the second text information, by referring to a storage unit that stores vector information according to an attribute of a word, associating with the attribute, and that generates a conversion model by performing training of parameters of the conversion model such that vector information output when the first vector information is input to the conversion model approaches the second vector information.

10. The information processing apparatus according to claim 9, wherein
the accepting unit accepts third text information,
the storage unit stores vector information according to a word, an occurrence rate of which is equal to or higher than a criterion, and
the generation processing unit extracts a word included in the third text information, identifies third vector information associated with a word included in the third text information, by referring to the storage unit, and generates the conversion model by performing training of parameters of the conversion model such that vector information output when the first vector information is input to the conversion model approaches the third vector information.

11. The information processing apparatus according to claim 9, wherein
the accepting unit accepts text information of a subject to translation, and
the generation processing unit extracts a plurality of words included in the text information of the subject to translation, identifies vector information that is associated with an attribute of a word, an occurrence rate of which is lower than a criterion for a word, an occurrence rate of which is lower than the criterion out of the words, identifies vector information associated with a word, an occurrence rate of which is equal to or higher than a criterion for a word, an occurrence rate of which is equal to or higher than the criterion, by referring to the storage unit, and further performs processing of generating text information based on a plurality of pieces of vector information output from the conversion model when a plurality of pieces of the identified vector information are input to the conversion model.

12. The information processing apparatus according to any one of claims 9, 10, and 11, wherein
the storage unit associates a single piece of vector information to synonyms, an occurrence rate of which is lower than a criterion.

# FIG.1

```
                                              ⌐10
┌─────────────────────────────────────────────┐
│        Kare wa rekishi ni tsugyo shiteiru.   │
└─────────────────────────────────────────────┘
```

⬇

```
                                              ⌐10a
┌─────────────────────────────────────────────┐
│   Kare△ wa△ rekishi△ ni△ tsugyo△ shiteiru△. │
└─────────────────────────────────────────────┘
```

ENCODE ⬇

```
                              ⌐150e
                ┌──────────────────────┐
                │      DICTIONARY       │
                │     INFORMATION       │
                └──────────────────────┘
```

```
                                              ⌐10b
┌─────────────────────────────────────────────┐
│  "Kare△" "wa△" "rekishi△" "ni△" "tsugyo△" "shiteiru△". │
└─────────────────────────────────────────────┘
```

⬆ COMPARE AND ASSIGN VECTOR ⬇

⌐150a

| ... | ... |
|---|---|
| (Kare△) | Vec1-1 |
| (wa△) | Vec1-2 |
| (rekishi△) | Vec1-3 |
| (ni△) | Vec1-4 |
| (shiteiru△) | Vec1-5 |
| ... | ... |

| | ... | ... |
|---|---|---|
| SYNONYM | (tsugyo△),(seitsu△),(kuwashii△),······ | Vec1-1a |
| | ... | ... |

# FIG.2

# FIG.3

# FIG.4

**INFORMATION PROCESSING APPARATUS** (100)

**CONTROL UNIT** (160)

- ACCEPTING UNIT (160a)
- VECTOR IDENTIFYING UNIT (160b)
- GENERATING UNIT (160c)
- TRANSLATING UNIT (160d)

**STORAGE UNIT** (150)

- FIRST VECTOR TABLE (150a)
- SECOND VECTOR TABLE (150b)
- TRAINING DATA TABLE (150c)
- CODE CONVERSION TABLE (150d)
- DICTIONARY INFORMATION (150e)
- RNN DATA (150f)
- INPUT SENTENCE DATA (150g)
- OUTPUT SENTENCE DATA (150h)

- COMMUNICATION UNIT (110)
- INPUT UNIT (120)
- DISPLAY UNIT (130)

# FIG.5

150a

| STATIC CODE OR DYNAMIC CODE OF FIRST LANGUAGE | FIRST VECTOR |
|---|---|
| ... | ... |
| 6002h(Kare△) | Vec1-1 |
| 6003h(wa△) | Vec1-2 |
| 6004h(rekishi△) | Vec1-3 |
| 6005h(ni△) | Vec1-4 |
| 6006h(shiteiru△) | Vec1-5 |
| ... | ... |
| E005h(tsugyo△),E006h(seitsu△), E007h(kuwashii△)・・・ | Vec1-1a |
| ... | ... |

# FIG.6

150b

| STATIC CODE OR DYNAMIC CODE OF SECOND LANGUAGE | SECOND VECTOR |
|---|---|
| ... | ... |
| 7073h(He△) | Vec2-1 |
| 7074h(is△) | Vec2-2 |
| 7075h(with△) | Vec2-3 |
| 7076h(history△) | Vec2-4 |
| ... | ... |
| F034h(familiar△) | Vec2-1a |
| ... | ... |

# FIG.7

150c

| INPUT SENTENCE | OUTPUT SENTENCE |
|---|---|
| Kare wa rekishi ni tsugyo shiteiru. | He is familiar with history. |
| Kono bunsho wo honyaku shitekudasai. | Please translate this sentence. |
| . . . | . . . |

# FIG.8

150d

151a

| FIRST WORD | COMPRESSED CODE |
|---|---|
| . . . | . . . |
| Kare△ | C101 |
| wa△ | C102 |
| rekishi△ | C103 |
| ni△ | C104 |
| . . . | . . . |
| tsugyo△ | C105 |
| seitsu△ | C106 |
| kuwashii△ | C107 |
| shiteiru△ | C108 |
| . . . | . . . |

151b

| SECOND WORD | COMPRESSED CODE |
|---|---|
| . . . | . . . |
| He△ | C201 |
| is△ | C202 |
| familiar△ | C203 |
| with△ | C204 |
| . . . | . . . |
| history△ | C205 |
| . . . | . . . |

# FIG.9

150e

152a

| COMPRESSED CODE | STATIC CODE |
|---|---|
| ... | ... |
| C101 | 6002h(Kare△) |
| C102 | 6003h(wa△) |
| C103 | 6004h(rekishi△) |
| C104 | 6005h(ni△) |
| C108 | 6006h(shiteiru△) |
| ... | ... |

153a

| COMPRESSED CODE | STATIC CODE |
|---|---|
| ... | ... |
| C201 | 7073h(He△) |
| C202 | 7074h(is△) |
| ... | ... |
| C204 | 7075h(with△) |
| C205 | 7076h(history△) |
| ... | ... |

152b

| DYNAMIC CODE | POINTER TO COMPRESSED CODE |
|---|---|
| E005h(tsugyo△) | POINTER TO POSITION OF STORAGE AREA STORING "C105" |
| E006h(seitsu△) | POINTER TO POSITION OF STORAGE AREA STORING "C106" |
| E007h(kuwashii△) | POINTER TO POSITION OF STORAGE AREA STORING "C107" |
| ... | ... |

153b

| DYNAMIC CODE | POINTER TO COMPRESSED CODE |
|---|---|
| F034h (familiar△) | POINTER TO POSITION OF STORAGE AREA STORING "C203" |
| ... | ... |

# FIG.10

5 150d

| RNN IDENTIFICATION INFORMATION | PARAMETER |
|---|---|
| 61-1 | PARAMETER SET TO INTERMEDIATE LAYER 61-1 |
| 61-2 | PARAMETER SET TO INTERMEDIATE LAYER 61-2 |
| 61-3 | PARAMETER SET TO INTERMEDIATE LAYER 61-3 |
| ... | ... |
| 61-n | PARAMETER SET TO INTERMEDIATE LAYER 61-n |
| 63-1 | PARAMETER SET TO INTERMEDIATE LAYER 63-1 |
| 63-2 | PARAMETER SET TO INTERMEDIATE LAYER 63-2 |
| ... | ... |
| 63-n | PARAMETER SET TO INTERMEDIATE LAYER 63-n |

# FIG.11

# FIG.12

START

ACCEPT TRAINING DATA TABLE — S101

ACQUIRE TRAINING DATA FROM TRAINING DATA TABLE — S102

ASSIGN COMPRESSED CODE TO RESPECTIVE WORDS INCLUDED IN INPUT SENTENCE — S103

ASSIGN STATIC CODE OR DYNAMIC CODE TO RESPECTIVE COMPRESSED CODES — S104

IDENTIFY RESPECTIVE FIRST VECTORS CORRESPONDING TO RESPECTIVE STATIC CODES BASED ON FIRST VECTOR TABLE — S105

IDENTIFY ATTRIBUTE OF DYNAMIC CODE BASED ON FIRST VECTOR TABLE,AND IDENTIFY FIRST VECTOR CORRESPONDING TO ATTRIBUTE — S106

ASSIGN COMPRESSED CODE TO RESPECTIVE WORDS INCLUDED IN OUTPUT SENTENCE — S107

ASSIGN STATIC CODE AND DYNAMIC CODE TO RESPECTIVE COMPRESSED CODES — S108

IDENTIFY SECOND RESPECTIVE VECTORS CORRESPONDING TO RESPECTIVE STATIC CODES BASED ON SECOND VECTOR TABLE — S109

IDENTIFY ATTRIBUTE OF DYNAMIC CODE BASED ON SECOND VECTOR TABLE,AND IDENTIFY FIRST VECTOR CORRESPONDING TO ATTRIBUTE — S110

INPUT RESPECTIVE FIRST VECTORS TO RESPECTIVE INTERMEDIATE LAYERS OF RNN,AND ADJUST PARAMETERS SUCH THAT RESPECTIVE VECTORS OUTPUT FROM RESPECTIVE INTERMEDIATE LAYERS OF RNN APPROACH RESPECTIVE SECOND VECTORS — S111

CONTINUE TRAINING? — S112

YES

ACQUIRE NEW TRAINING DATA FROM TRAINING DATA TABLE — S113

NO

END

# FIG.13

START

ACCEPT INPUT SENTENCE DATA ～S201

ASSIGN COMPRESSED CODES TO RESPECTIVE WORDS INCLUDED IN INPUT SENTENCE DATA ～S202

ASSIGN STATIC CODE OR DYNAMIC CODE TO RESPECTIVE COMPRESSED CODES BASED ON DICTIONARY INFORMATION ～S203

IDENTIFY RESPECTIVE FIRST VECTORS CORRESPONDING TO RESPECTIVE STATIC CODES BY REFERRING TO FIRST VECTOR TABLE ～S204

IDENTIFY FIRST VECTOR CORRESPONDING TO ATTRIBUTE OF DYNAMIC CODE BY REFERRING TO FIRST VECTOR TABLE ～S205

INPUT RESPECTIVE FIRST VECTORS TO RESPECTIVE INTERMEDIATE LAYERS OF RNN,AND ACQUIRE RESPECTIVE SECOND VECTORS OUTPUT FROM RESPECTIVE INTERMEDIATE LAYERS OF RNN ～S206

CONVERT RESPECTIVE SECOND VECTORS TO STATIC CODE AND DYNAMIC CODE BY REFERRING TO SECOND VECTOR TABLE ～S207

CONVERT STATIC CODE AND DYNAMIC CODE TO COMPRESSED CODE ～S208

CONVERT COMPRESSED CODE INTO WORD, TO GENERATE OUTPUT SENTENCE DATA ～S209

SEND OUTPUT SENTENCE DATA TO EXTERNAL DEVICE ～S210

END

# FIG.14

COMPUTER 200

CPU 201 | INPUT DEVICE 202 | DISPLAY 203 | READER DEVICE 204 | INTERFACE DEVICE 205

BUS 208

RAM 206
- ACCEPTANCE PROCESS — 206a
- VECTOR IDENTIFICATION PROCESS — 206b
- GENERATION PROCESS — 206c
- TRANSLATION PROCESS — 206d

HARD DISK DEVICE 207
- ACCEPTANCE PROGRAM — 207a
- VECTOR IDENTIFICATION PROGRAM — 207b
- GENERATION PROGRAM — 207c
- TRANSLATION PROGRAM — 207d

EP 3 846 070 A1

## INTERNATIONAL SEARCH REPORT

| | International application No. |
|---|---|
| | PCT/JP2018/032206 |

**A. CLASSIFICATION OF SUBJECT MATTER**
Int. Cl. G06F17/28(2006.01)i, G06F17/30(2006.01)i

According to International Patent Classification (IPC) or to both national classification and IPC

**B. FIELDS SEARCHED**

Minimum documentation searched (classification system followed by classification symbols)
Int. Cl. G06F17/28, G06F17/30

Documentation searched other than minimum documentation to the extent that such documents are included in the fields searched
Published examined utility model applications of Japan      1922-1996
Published unexamined utility model applications of Japan    1971-2018
Registered utility model specifications of Japan            1996-2018
Published registered utility model applications of Japan    1994-2018

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | 増田嵩志外1名, ニューーラルネットワーク日英機械翻訳における品詞情報の利用, 言語処理学会第22回年次大会 発表論文集 [online], 29 February 2016, pp. 294-297, non-official translation (MASUDA, Takashi, TSURUOKA, Yoshimasa. Using Part-of-Speech Information in Neural Network Japanese-English Machine Translation. Proceedings of the 22nd Annual Meeting of the Natural Language Processing Society.) | 1-12 |
| A | 小松広弥外3名, 単語分散表現の shift-reduce 型構文解析への利用, 情報処理学会 研究報告 音声言語情報処理 (SLP) 2015-SLP-106 [online], 18 May 2015, pp. 1-8, non-official translation (KOMATSU, Hiroya et al. Use of Distributed Word Representation in shift-reduce-Type Syntactic Analysis. IPSJ SIG Technical Report (SLP).) | 1-12 |

☐ Further documents are listed in the continuation of Box C.   ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 02.11.2018 | 20.11.2018 |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**EP 3 846 070 A1**

**Patent documents cited in the description**

- JP 2005135217 A